# EUROPEAN PATENT APPLICATION

(11) **EP 3 447 929 A1**
(43) Date of publication of application: **27.02.2019**
(21) Application number: 17465541.5
(22) Date of filing: 23.08.2017
(51) Int. Cl.: H04B 5/00, H02J 50/10, H01Q 9/42, H01Q 1/22

(54) **3-D NFC ANTENNA INTEGRATION IN WIRELESS CHARGER**

(71) Applicant: Continental Automotive GmbH, 30165 Hannover (DE)
(72) Inventor: Craciun, Serban, 325400 Caransebes (RO); Ionescu, Ioana Sabina, 331042 Hunedoara (RO)

(57) **Abstract**

The present invention refers to a NFC antenna for near field communication, in particular integrated in a wireless charging pad, comprising at least one loop surrounding an area in which energy and/or an information is transferable, wherein the NFC antenna comprises a three dimensional geometry extending in at least a first and a second plane being spaced apart. Furthermore, the present invention refers to a wireless charging pad comprising a NFC antenna for transferring energy and/or an information in a near field communication and to a method for transferring energy and/or an information using a near field communication, in particular for initiating a charging cycle, between a communication device and a wireless charging pad.

## Description

The present invention refers to an NFC (Near Field Communication) antenna, to a wireless charging pad comprising an NFC antenna, and a method for transferring energy and/or an information using a near field communication.

NFC stands for Near Field Communications and goes by the acronym NFC. NFC is simply a set of standards for smartphones or whatever to establish communication with each other by bringing them into close proximity together, in particular typically 0-5 centimeters.

The application of NFC include for example swiped proximity payments, information exchange at small distances like touching smartphones to share contact information, and simplified setup of devices such as Wi-Fi or Bluetooth. Communication is also possible between an NFC device and an unpowered NFC chip, also known as RFID tag. The application of NFC is also known for energy charging cycles. Thus, the application of NFC serves as a method of communication between two devices at short distance.

Typically, the operating frequency of NFC antennas is about 13.56 MHz. The corresponding wavelength is 22 meters long. A challenge in NFC antenna design is to obtain a "radiating" structure when the NFC antenna area may be limited to a few centimeters only, in particular 7 cm * 2.5 cm or the like. Thus, NFC antennas operate at low frequency (large wavelengths) on small devices and equals more an inductor then an antenna. As it is well known, if a magnetic field from one inductor passes near another inductor, an induced current will exist within the second inductor. This corresponds contactless energy transfer and equals exactly what NFC requires. However, within this description the term NFC antenna is used instead of the term "inductor". The larger the inductance of a NFC antenna can be made, the better it will perform.

A good NFC antenna is usually a wrapped coil of wire that is as large as possible. As well known a loop of wire around a material gives a strong magnetic field within the loop. The more turns are provided the more inductance can be created. Hence, NFC antennas are often simply loops of wire, occupying as much surface area as the device, in which the NFC antenna is used, allows.

For example, a conventional near filed communication (NFC) antenna of a NFC reader in a wireless charger base station is typically constituted by a spiral loop. The spiral loop is defined as a two dimensional curve in a plane that winds around a fixed center point at a continuously increasing or decreasing distance from said point.

In known wireless charging pads such a two dimensional NFC antenna is usually placed at the edges of a PCB plate above a charging coil. In order to transmit information to or to charge an electronic devices via energy transfer, for example, a smartphone, a card, a PDA or the like, a second NFC endpoint being located within said electronic device has to be placed above the a two dimensional NFC antenna, acting as a so called reader antenna. The positioning of the electronic device on top of the wireless charging pad has to be positioned in a close proximity to the NFC antenna and with a good alignment of the two NFC antennas in order to avoid losing the NFC functionality.

Many smartphones, for example, integrate the NFC antenna in a top position around or next to the camera integrated in the smartphone. When said smartphone is placed on a wireless charging pad, it is possible that the NFC antenna of the smartphone does not match the area of the NFC antenna from the wireless charging pad. Such a misalignment of NFC antennas, together with the fact that almost all the surface of the NFC antenna from the wireless charger will be covered by the smartphone body, leads to a strong mismatching of the impedances of the NFC antennas. Thus, the NFC functionality may be lost.

Therefore, an objective technical problem to be solved is to provide to NFC antenna with an improved performance, in particular with an increased NFC communication performance and with an enlarged coverage area.

This task is solved by a NFC antenna for near field communication, in particular integrated in a wireless charging pad, according to claim 1, and is solved by a wireless charging pad comprising a NFC antenna for transferring energy and/or an information in a near field communication according to claim 6, and is solved by a method for transferring energy and/or an information using a near field communication, in particular for initiating a charging cycle, between a communication device and a wireless charging pad according to claim 14.

According to the present invention a NFC antenna for near field communication, in particular integrated in a wireless charging pad, is proposed. The proposed NFC antenna comprises at least one loop surrounding an area in which energy and/or an information is transferable. The NFC antenna comprises a three dimensional geometry extending in a first and an at least second plane being spaced apart.

A loop is defined as a closed or a nearly closed curve, wherein a nearly closed curve is provided with an interruption, in particular at least partly along a part of the curve. The proposed NFC antenna extends in more than one plane, wherein the at least two planes are arranged preferably in parallel to one another and being preferably separated from one another, in particular by a part of at least one loop of the NFC antenna.

The at least two planes are interconnected by a part of the NFC antenna, in particular along a z - direction extending perpendicular to the at least two planes. By providing the NFC antenna into at least two planes the NFC antenna is split into two antennas which are in particular separated from each other. This means, it is possible to provide an antenna in each plane, wherein such antennas are interconnected. Preferably the NFC antenna extends along two planes being spaced apart. However, it is possible that the antenna extends over three or more than three planes, which are each spaced apart from another plane, in particular in parallel. By spreading the NFC antenna into at least two planes, a larger coverage area can be obtained. Furthermore, the NFC communication performance is increased.

According to an embodiment of the NFC antenna, each loop of the NFC antenna defines an area, wherein a first part of said area extends in a first plane and an at least second part of said area extends in an at least second plane, in particular wherein the first plane and the at least second plane are spaced apart in parallel.

The first part of said area is defined as a first area and the second part of said area is defined as a second area. The first area can be greater than the second area or vice versa. In particular each antenna is provided with a first area and with a second area. An advantage of splitting the NFC antennas over two separated planes is that the antennas can be arranged such that a larger NFC coverage and/or a smaller detuning of the antenna impedance can be achieved.

According to an embodiment of the NFC antenna the first plane and the at least second plane are spaced apart by a part of the respective antenna loop.

The antenna in the at least two planes are interconnected by the antenna itself. Preferably the first plane and the second plane are spaced apart up to 1cm, preferably up to 0,5 cm, preferably up to 0,4 cm, preferably up to 0,3 cm, preferably up to 0,25 cm, or preferably up to 0,15 cm.

According to an embodiment of the NFC antenna said part of the respective antenna loop spans an angle with the first and/or the at least second plane, in particular wherein the angle corresponds to a perpendicular angle.

Preferably the part between the first and the second plane is arranged between the first and the second plane at a perpendicular angle plus minus 0,05 to 1 degree. It is also possible to provide the part between the first and the second plane such that the part is arranged with an angle deviating from a perpendicular angle, though the first plane and the second plane are arranged to each other in parallel.

According to an embodiment of the NFC antenna the NFC antenna is split in at least two antennas, wherein each of the at least two antennas extends in at least two planes, so that the at least two antennas are positioned in a complementary configuration to each another in the at least two planes, in particular so that each antenna comprises a first area in the first plane and an at least second area in the second plane.

The conventional large antenna, is divided into two separate parts, i.e., two smaller antennas. These two separate antennas can be run in parallel like a single antenna. This configuration has the advantage that the antenna or antennas can cover the entire surface of a charging pad, for example, in a situation when a smart-phone integrates a large NFC antenna, or it can be run independently by multiplexing the antennas depending on the location of the NFC antenna in the smart-phone.

According to a further aspect of the present invention, a wireless charging pad comprising a NFC antenna for transferring energy and/or an information in a near field communication as described herein is presented. The charging pad comprises a first circuit board and at least a second circuit board, both being spaced apart, in particular in parallel, wherein the NFC antenna is embodied according to one embodiment of the NFC antenna described above.

Preferably the first plane extends along the first circuit board and the second plane extends along the second circuit board. Furthermore preferably, the first circuit board is provided with a first total area that is greater than the second area which extends in the second plane along the second circuit board. Preferably, on the first circuit board most, in particular all, electronic components of the wireless charging pad and/or of a NFC reader are disposed. Preferably the first circuit board represents a ground plane or plate respectively of the wireless charging pad. The second circuit board comprises a part of the NFC antenna and can comprise a coupler antenna for GSM and/or sensors, for example, a temperature sensor and/or a capacitive sensor. Preferably the second circuit board represents a top plane or plate respectively of the wireless charging pad.

According to a further embodiment of the proposed wireless charging pad the first plane is parallel to the first circuit board and the second plane is parallel to the at least second circuit board.

The first and the second circuit board are spaced apart, in particular by a part of the antenna. This means the antenna extends along at least two different circuit boards, that are preferably interconnected by a part of the antenna extending between the at least two circuit boards.

According to a further embodiment of the proposed wireless charging pad each loop of the NFC antenna defines an area, wherein a first part of said area extends in the first circuit board and an at least second part of said area extends in the at least second circuit board.

The first part of said area is also introduced as a first area and the second part of said area is introduced as a second area in the following. The first area or the second area of the loop respectively is a part of the total first area or the total second area respectively corresponding to the corresponding circuit board.

According to a further embodiment of the proposed wireless charging pad the at least two circuit boards are spaced apart by means of one or more interconnectors, preferably two interconnectors, which guide a part of the at least one loop between the first and the at least second circuit board.

The two separate antennas are each made by two so called trace loops. The loops are passed between the parallel planes through the interconnectors, in particular 2 x 4 pins interconnector, where 2 pins carry the signal from one antenna and the other 2 pins for the second antenna. Each antenna is disposed in half of the plane on the first plane, in particular a bottom plane, and continue in the opposite half of the second plane, in particular a top plane.

According to a further embodiment of the proposed wireless charging pad the first circuit board comprises a greater dimension than the at least one second circuit board.

Preferably, the first board is configured as a bottom plane or as a ground plane onto which most or all electronic components of the wireless charging pad are displaced. In between the first and the second circuit board a coil or several coils of the wireless charging pad are placed, for generating the energy and/or information that is to be transferred.

According to a further embodiment of the proposed wireless charging pad the first circuit board comprises at least an electronic element for a wireless charger and/or at least an electronic element for a NFC reader. Preferably, the first circuit board comprises most or all electronic components of the wireless charging pad and is configured with a greater dimension than the second circuit board. The dimensional ration between the first to the second circuit board is about 1, 5: 1, preferably 2: 1.

According to a further embodiment of the proposed wireless charging pad, in a space between the first and the second circuit board at least one coil for charging the wireless charger is arranged. Preferably, several coils are arranged between the two circuit boards. The space between the first and the second circuit board comprises a distance of up to 2cm, preferably up to 1 cm and at least of 0,5 cm. Preferably, the distance between the two circuit boards is dictated by the thickness of the charging coil. The extension of the charging coil is about 2cm, preferably 1cm, preferably about 0.5cm.

According to a further embodiment of the proposed wireless charging pad the second circuit board comprises a part of the NFC antenna and/or a coupler antenna for a GSM-communication and/or a sensor, in particular a temperature sensor and/or a capacitive sensor. The coupler antenna is preferably arranged in the area of the second circuit board where the NFC antenna is not placed. The sensor or the sensors are placed near or adjacent to the NFC antenna and/or the coupler antenna.

According to a further aspect of the present invention a method for transferring energy and/or an information using a near field communication, in particular for initiating a charging cycle, between a communication device and a wireless charging pad is proposed wherein a charging pad as described herein is used. The method comprises the steps:
- arranging the communication device on top of the wireless charging pad,
- scanning the near field of the wireless charging pad communication device,
- receiving a response from a NFC command of an NFC antenna,
- continuing with transferring energy and/or the information by means of the NFC antenna.

A further preferred embodiment of the method comprises the usage of an NFC antenna that is split into at least two antennas. The method comprises then the steps:
- arranging the communication device on top of the wireless charging pad
- scanning the near field of the wireless charging pad, so that the first area and the second area are scanned in a multiplexed configuration by the communication device,
- receiving a response from a NFC command of one NFC antenna,
- continuing with transferring energy and/or the information by means of the NFC antenna that has responded.

The wireless charging pad used for the proposed method comprises a NFC antenna being spilt into at least a first and an at least second, in particular separate, NFC antenna, so that the first antenna covers a first area and the at least second antenna covers a second area, so that the fields radiating from the first and the second area mismatch and/or match at least partly. By using two multiplexed antennas and by splitting them between the first and the second circuit board, the performance of the NFC antenna can be enhanced due to a larger NFC coverage and/or due to a smaller detuning of the antenna impedance. During a polling cycle of the NFC scanning, for example, the two antennas are multiplexed. This means a scan at the, first, for example a left, antenna and at the second, for example a right, antenna is performed. When a response from a NFC command is received, then the communication will continue only with the antenna that has responded. An advantage of the proposed method is that a larger coverage area is involved for transferring energy and/or information, that the NFC communication performance is increased due to less impedance mismatching because the antennas as such are provided with a smaller dimension. Last but not least, the second circuit board, being preferably the top circuit board, can be made with smaller dimensions than the first circuit board being preferably the bottom circuit board.

Further advantages and features of the present invention result from the following description of preferred embodiments with respect to the enclosed Figures. It should be clear that single features shown in the Figures of the different embodiments can be combined among each other, if such a combination is not technically or expressively excluded.

The Figures show:
- Fig. 1: a NFC antenna according to the prior art,
- Fig. 2: a NFC antenna according to an embodiment of the present invention,
- Fig. 3: a further embodiment of the NFC antenna,
- Fig. 4: a perspective view of the NFC antenna embedded in circuit boards of a wireless charging pad according an embodiment of the present invention,
- Fig. 5: a top view of the NFC antenna according to Fig. 4, and
- Fig. 6: a side view of the NFC antenna according to Fig. 4 and 5.

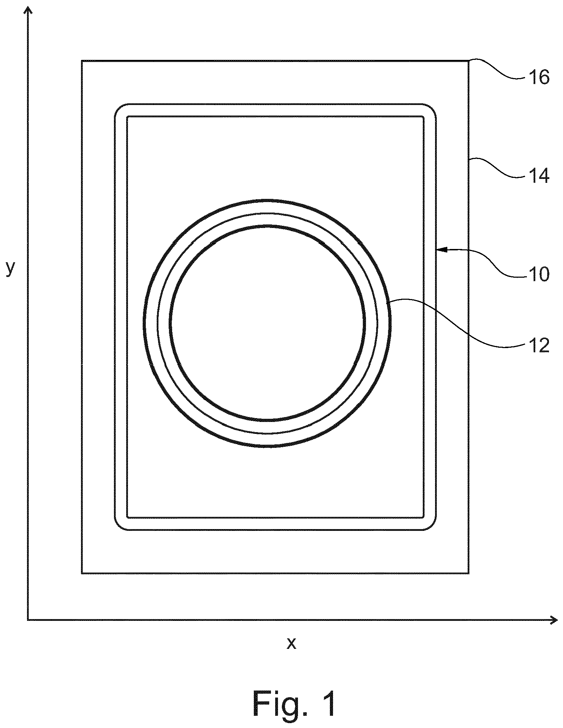

Fig. 1 shows a NFC antenna 10 as it is well known in the prior art. The NFC antenna 10 surrounds a coil 12, in particular a charging coil, and is embedded in a PCB-plate 14. The NFC antenna 10 known from the prior art extends in two dimensions, for example an x-direction and a y-direction, in a plane 16. The PCB-plate usually defines said plane 16, i.e. the PCB-plate extends in parallel to said plane. The extension of the NFC antenna along a z-direction being perpendicular to the x-direction and the y-direction is negligible, since the z-component is only defined by the width of the antenna.

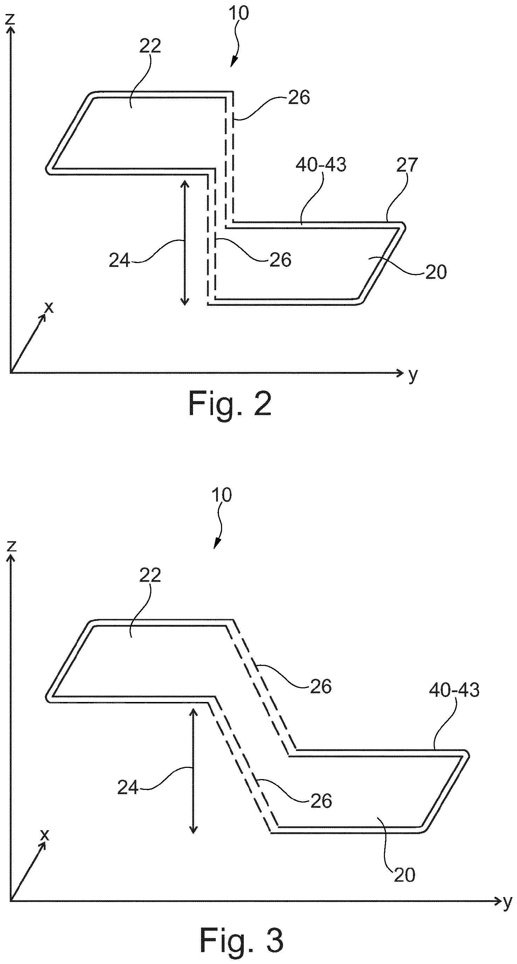

Fig. 2 shows an embodiment of the NFC antenna 10 according to the present invention. The NFC antenna 10 extends along a first plane 20 and along a second plane 22, wherein the first plane 20 and the second plane 22 are spaced apart a distance 24, in particular along the z-direction. Thus, the NFC antenna according to the invention extends over three dimension in x-, y- and z-direction. As shown in Fig. 2 the first plane 20 and the second plane 22 are in parallel to each other. Both planes 20, 22 are interconnected by a part 26 of a loop 40-43 of the NFC antenna 10 building an interconnection between both planes 20, 22. The part 26 equals to the distance 24. Preferably, the part 26 extends perpendicular to the first plane 20 and the second plane 22.

Fig. 3 shows a further embodiment of the NFC antenna 10 according to the present invention. The difference between the NFC antenna 10 of Fig. 2 and Fig. 3 is that the interconnection of part 26 between the first and the second plane 20, 22 is provided with an angle deviating from a perpendicular angle. The part 26 may hit the first and the second plane at an angle of about 90 degrees plus minus up to 20 degrees.

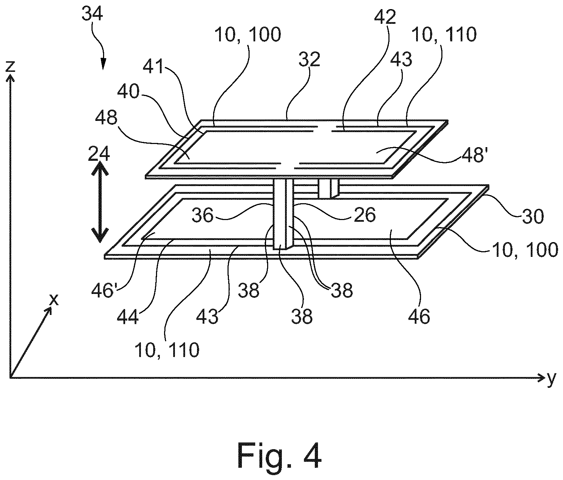

Fig. 4 shows a perspective view of the NFC antenna 10 according to an embodiment, which is embedded in circuit boards 30, 32 of a wireless charging pad 34. The circuit boards are provided as a first circuit board 30, in particular being a bottom plate, and as a second circuit board 32, in particular being a top plate. The first circuit board 30 and the second circuit board 32, both extend in the x-direction and in the y-direction. However the first and the second circuit board 30, 32 are spaced apart the distance 24. The distance 24 between the first and the second circuit board 30, 32 is bridged by interconnectors 36. Each interconnector 36 is provided as several pins 38, in particular as four pins 38.

Each pin 38 guides a part 26 of a loop 40-44 of the NFC antenna 10 building the interconnection between the first and the second planes 20, 22 or the first and the second circuit boards 30, 32. As shown in Fig. 4 the NFC antenna 10 is split into two separate NCF antennas 100 and 110, wherein each antenna 100, 110 extends along the first plane 20 and the second plane 22, i.e. along the first circuit board 30 and the second circuit board 32. The interconnector 36 guides the interconnecting part of the respective loop 40-43. The NFC antenna 10 is designed such that it provides a first area 46 in the first circuit board 30 and provides a second area 48 in the second circuit board 32. Furthermore, the other antenna 110 is designed such that it provides a first area 46' in the first circuit board 30 and provides a second area 48' in the second circuit board 32. Thus, the two separate antennas 100, 110 are arranged along the fist and the second circuit boards 30, 32 in a complementary configuration.

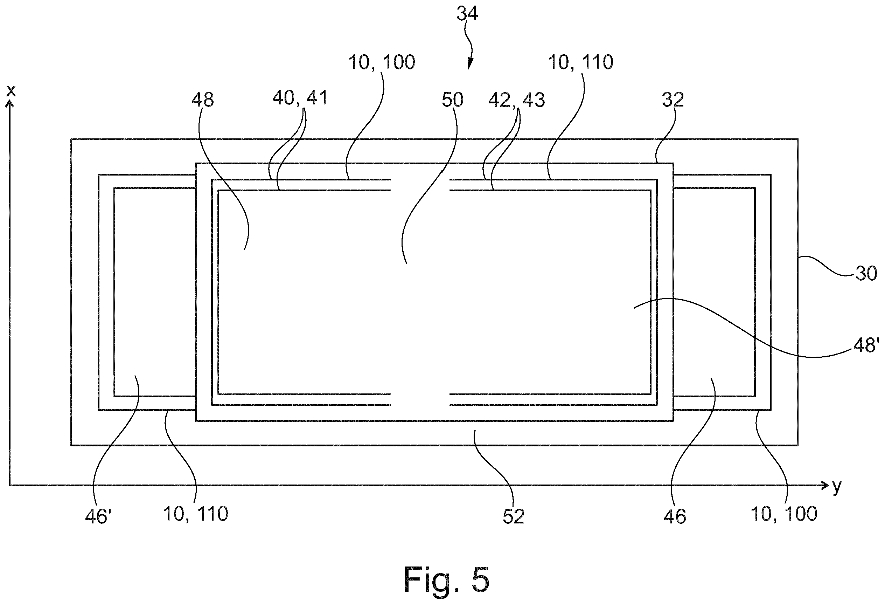

Fig. 5 shows a top view of the NFC antenna 10, 100, 110 and the wireless charging pad 34 according to Fig. 4. The second circuit board 32 is smaller than the first circuit board 30; i.e., the second circuit board 32 is provided with a smaller total first area 52 than the first circuit board 30 being provided with a larger total second area 50. The first areas 46, 46' are each a part of the total first area 52. The second areas 48, 48' are each a part of the total second area 50.

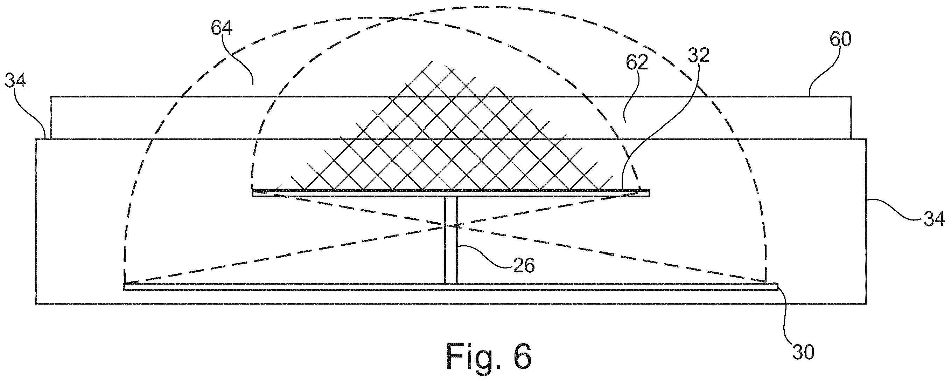

Fig. 6 a side view of the NFC antenna 10 or the wireless charging pad 34 according to Fig. 4 and 5. The Fig. 6 indicates the functioning of the proposed method for transferring energy and/or an information using a near field communication, in particular for initiating a charging cycle, between a communication device 60 and a wireless charging pad 34 as just described. The proposed method comprises the steps:
- arranging the communication device 60 on top of the wireless charging pad 34
- scanning the near field 62, 64 of the wireless charging pad 34, so that the first area 46, 46' and the second area 48, 48' are scanned in a multiplexed configuration by the communication device 60,
- receiving a response from a NFC command of one NFC antenna 10, 100, 110,
- continuing with transferring energy and/or the information by means of the NFC antenna 100, 110 that has responded.

The antenna 100 emits a first near field 62 and the other antenna 110 emits a second near field 64, wherein the near field 62, 64 match partly and dismatch partly.

Advantages of the proposed method are the following:
- By spreading the NFC antenna 10 on two circuit boards 30, 32 between a top and a bottom PCB plate, a larger coverage area can be obtained. The coverage area corresponds to the emitting near filed 62, 64.
- The NFC communication performance is increased, due to less impedance mismatching for one smaller NFC antenna.
- The top PCB circuit board 32 can be made with smaller dimensions than the bottom PCB circuit board 30. The cost will be reduced.

### Reference signs

- 10: NFC antenna
- 12: coil
- 14: PCB-plate
- 16: plane
- 20: first plane
- 22: second plane
- 24: distance
- 26: part

- 30: first circuit board
- 32: second circuit board
- 34: wireless charging pad
- 36: interconnector
- 38: pin

- 40-43: loop
- 46, 46': first area
- 48, 48': second area
- 50: total second area
- 52: total first area

- 60: communication device
- 62: near filed
- 64: near field

- 100: NFC antenna
- 110: other NFC antenna

- X: x-direction
- Y: y-direction
- Z: z-direction

## Claims

1. NFC antenna (10) for near field communication, in particular integrated in a wireless charging pad (34), comprising at least one loop (40-43) surrounding an area in which energy and/or an information is transferable,
wherein the NFC antenna (10) comprises a three dimensional geometry extending in a first and an at least second plane (20, 22) being spaced apart.

2. NFC antenna (10) according to claim 1, wherein each loop (40-43) of the NFC antenna (10) defines an area wherein a first part of said area extends in the first plane (20) and an at least second part of said area extends in the at least second plane (22), in particular wherein the first plane (20) and the at least second plane (22) are spaced apart in parallel.

3. NFC antenna (10) according to one of the preceding claims, wherein the first plane (20) and the at least second plane (22) are spaced apart by a part (26) of the respective antenna loop (40-43).

4. NFC antenna (10) according to claim 3, wherein said part of the respective antenna loop (40-43) spans an angle with the first and/or the at least second plane (20, 22), in particular wherein the angle corresponds to a perpendicular angle.

5. NFC antenna (10) according to one of the preceding claims, wherein the NFC antenna (10) is split in at least two antennas (100, 110), wherein each of the at least two antennas (100, 110) extends in at least two planes (20, 22), i.e. the first and the at least second plane, so that the at least two antennas (100, 110) are positioned in a complementary configuration to each other in the at least two planes (20, 22), in particular so that each antenna (100, 110) comprises a first area (46, 46') in the first plane (20) and an at least second area (48, 48') in the second plane (22).

6. Wireless charging pad (34) comprising a NFC antenna (10, 100, 110) for transferring energy and/or an information in a near field communication, the charging pad (34) comprises a first circuit board (30) and at least a second circuit board (32), both being spaced apart, in particular in parallel, wherein the NFC antenna (10, 100, 110) is embodied according to one of the claims 1 to 5.

7. Wireless charging pad (34) according to claim 6, wherein the first plane (20) is parallel to the first circuit board (30) and the second plane (22) is parallel to the at least second circuit board (32).

8. Wireless charging pad (34) according to claim 6 or 7, wherein each loop (40-43) of the NFC antenna (10, 100, 110) defines an area, wherein a first part of said area extends in the first circuit board (30) and an at least second part of said area extends in the at least second circuit board (32).

9. Wireless charging pad (34) according to one of the preceding claims 6 - 8, wherein the at least two circuit boards (30, 32) are spaced apart by means of one or more interconnectors (36), preferably two interconnectors, which guide a part of the at least one loop (40-43) between the first and the at least second circuit board (30, 32).

10. Wireless charging pad (34) according to one of the claims 6 - 9, wherein the first circuit board (30) comprises a larger dimension than the at least one second circuit board (32).

11. Wireless charging pad (34) according to one of the claims 6 - 10, wherein the first circuit board (30) comprises at least an electronic element for a wireless charger and/or at least an electronic element for an NFC reader.

12. Wireless charging pad (34) according to one of the claims 6 - 11, wherein in a space between the first and the second circuit board (30, 32) at least one coil (12) for charging the wireless charger is arranged.

13. Wireless charging pad (34) according to one of the claims 6 - 12, wherein the second circuit board (32) comprises a part of the NFC antenna (10, 100, 110) and/or a coupler antenna for a GSM-communication and/or a sensor, in particular a temperature sensor and/or a capacitive sensor.

14. Method for transferring energy and/or an information using a near field communication, in particular for initiating a charging cycle, between a communication device (60) and a wireless charging pad (34) according to one of the claims 6-13, the method comprises the steps:
- arranging the communication device (60) on top of the wireless charging pad (34)
- scanning the near field of the wireless charging pad (34) communication device (60),
- receiving a response from a NFC command of an NFC antenna (10, 100, 110),
- continuing with transferring energy and/or the information by means of the NFC antenna (10, 100, 110).

15. Method according to claim 14, wherein the wireless charging pad (34) is split in at least two antennas (10, 100, 110), the method comprises the steps:
- arranging the communication device (60) on top of the wireless charging pad (34),
- scanning the near field of the wireless charging pad (34), so that the first area (46, 46') and the second area (48, 48') are scanned in a multiplexed configuration by the communication device (60),
- receiving a response from a NFC command of one NFC antenna (10, 100, 110),
- continuing with transferring energy and/or the information by means of the NFC antenna (10, 100, 110) that has responded.
